# EUROPÄISCHE PATENTANMELDUNG

(11) **EP 2 338 621 A1**
(43) Veröffentlichungstag der Anmeldung: **29.06.2011**
(21) Anmeldenummer: 09015738.9
(22) Anmeldetag: 18.12.2009
(51) Int. Cl.: B22D 2/00, B22D 41/18, B22D 41/20, G01J 5/00, G01K 1/00

(54) **Stopfen für einen Stopfenverschluss in einem metallurgischen Gefäss**

(71) Anmelder: SMS Concast AG, 8027 Zürich (CH)
(72) Erfinder: Dratva, Christian, 8052 Zürich (CH)
(74) Vertreter: Luchs, Willi

(57) **Zusammenfassung**

Die Erfindung betrifft eine Temperaturmesseinrichtung mit einem Sensor (11) zur Ermittlung der Temperatur der Metallschmelze (4) in metallurgischen Gefässen (1), die mit einem Stopfenverschluss (5) zur Regelung des Schmelzenausflusses versehen ist. Der Sensor (11) mit den dazugehörigen Verbindungskabeln (12) ist im Stopfen (6) des Verschlusses integriert. Auf diese Weise wird mit geringem konstruktiven Aufwand eine kontinuierliche und genaue Erfassung der Schmelzentemperatur nahe an der Ausflussöffnung des Gefässes sichergestellt. Die Einrichtung ist auch ohne Aufwand in bestehende Anlagen einbaubar.

## Beschreibung

Die Erfindung betrifft einen Stopfen für einen Stopfenverschluss in einem metallurgischen Gefäss, mittels welchem zur Regelung des Schmelzenausflusses eine Öffnung im Gefäss geschlossen bzw. geöffnet werden kann.

Derartige Gefässe werden beispielsweise in Stahlgiessanlagen als Zwischenbehälter (Tundish) zwischen einer Giesspfanne und einer Kokille zum Giessen von Stahlprodukten eingesetzt. Hierbei regelt der Stopfenverschluss die Ausflussmenge der in die Kokille fliessenden Stahlschmelze. Für die Regelung des Giessprozesses ist die Temperatur der Stahlschmelze am Kokilleneinlauf massgebend. Es ist daher wichtig, dass die Temperaturmesseinrichtung kontinuierlich von dort möglichst genaue Messwerte liefern kann.

Die bisher bekannten Einrichtungen dieser Art erfüllen diese Aufgabe nur begrenzt. Zudem sind sie hinsichtlich ihres Aufbaus und ihrer Handhabung sehr aufwendig. So weist eine aus der EP-A-1 614 489 bekannte Einrichtung einen den Temperatursensor aufnehmenden Messstab auf, der fest im Gefässboden in einer Buchse aus Feuerfestmaterial eingebaut ist und dort senkrecht in das Innere des Gefässes hineinragt.

Es ist bei dieser Einrichtung von Nachteil, dass der Gefässboden eine gesonderte Öffnung zur Aufnahme der Buchse mit dem Messstab aufweisen muss. Beim Einbau dieser Teile muss für die einwandfreie Dichtigkeit ihrer Sitze gesorgt werden. Dadurch ist der Ein- und Ausbau der Messsonde aufwendig, zumal er nur bei leerem Behälter möglich ist. Ausserdem befindet sich die Einbaustelle naturgemäss nicht in unmittelbarer Nähe der Ausflussöffnung des Behälters. Die dort gemessenen Temperaturwerte weichen somit mehr oder weniger von der Schmelzentemperatur im Kokilleneinlauf ab, die für die genaue Regelung des Giessprozesses massgebend ist.

Bei einer anderen aus der EP-A- 1 564 536 bekannten Einrichtung weist der Sensor eine optische Faser auf, die, von einem Träger gehalten, in die Metallschmelze eintauchbar ist. Da der Faserträger oberhalb des Gefässes plaziert ist, muss der Gefässdeckel mit einer Durchlassöffnung für die optische Faser und den sie aufnehmenden Schutzkörper versehen sein. Es ist ausserdem erforderlich, diesen und die optische Faser regelmässig zu erneuern bzw. die Faser mittels einer aufwendigen Vorrichtung nachzuführen. Im übrigen sind auch hier die ermittelten Messwerte nicht identisch mit der Schmelzentemperatur in unmittelbarer Nähe der Kokille.

Der Erfindung liegt die Aufgabe zugrunde, diese Nachteile zu vermeiden und eine Temperaturmesseinrichtung der eingangs genannten Art zu schaffen, die eine kontinuierliche Temperaturmessung mit möglichst geringem Einbauaufwand ermöglicht, und die in bestehende Anlagen mit möglichst geringen Anpassungen einbaubar ist.

Diese Aufgabe wird erfindungsgemäss dadurch gelöst, dass der Temperaturmesssensor im Stopfen des Stopfenverschlusses integriert ist.

Die erfindungsgemässe Einrichtung braucht somit keinen separaten Messstab für den Sensor und auch keine separate Durchführung für den Messstab. Da der Stopfen bekanntlich aus feuerfestem Material hergestellt ist, bietet er dem Sensor einen einwandfreien Schutz gegen die hohen Temperaturen im Gefäss. Der Sensor ist darin auch gegen die mechanischen und chemischen Einflüsse der Metallschmelze gut geschützt.

Der Einbau des Sensors in den Stopfen ist ebenfalls bei vorhandenen Anlagen unproblematisch, da man ihn bequem ausserhalb des Gefässes ohne Betriebsunterbrechung vornehmen kann. Schliesslich ist es von grossem Vorteil, dass die Temperaturmessung unmittelbar vor dem Kokilleneinlauf stattfindet. Die gemessenen Werte entsprechen somit am ehesten der tatsächlichen Temperatur des Flüssigstahls in der Kokille. Es ist in diesem Sinne von Vorteil, wenn der Sensor erfindungsgemäss in den Stopfenkopf tief hineinragt.

Es ist bei Stopfenverschlüssen aus fertigungstechnischen Gründen üblich, den Stopfen hohl mit einer axial verlaufenden Sackbohrung herzustellen. Diese kann ohne weiteres den Sensor mit den dazugehörigen Verbindungsleitungen aufnehmen. Dadurch wird der Einbau des Sensors in den Stopfen sehr erleichtert.

Generell ist der Stopfen am Tragarm einer Halterung mit einer Betätigungseinrichtung zum Heben, Senken und gegebenenfalls Schwenken des Stopfens angeordnet. In diesem Fall können die Verbindungsleitungen des Sensors erfindungsgemäss über den Tragarm zur Halterung gezogen werden, um sie dort an das Messgerät der Temperaturmesseinrichtung anzuschliessen. Die Installation des Sensors bedarf somit keiner zusätzlichen Massnahmen.

Um den Anschluss des Sensors an das Temperaturmessgerät zu vereinfachen, sieht die Erfindung vor, dass letzteres ein entsprechendes Anschlusselement aufweist, welches gut zugänglich an der Halterung angebracht ist.

Mit Rücksicht auf die im Betrieb herrschenden Bedingungen ist es zweckmässig, für die Verbindungsleitungen des Sensors hochtemperaturfeste elektrische Kabel zu verwenden. Theoretisch könnte Signale aber auch via Funk oder dergleichen übertragen werden.

Bei Anlagen, die mit einer Stopfenspülung versehen sind, wird diese zweckmässigerweise mit der Temperaturmesseinrichtung kombiniert, indem die den Sensor aufnehmende Sackbohrung des Stopfens als Gasspülzufuhrleitung dient, die im Bereich des Stopfenkopfes in eine oder mehrere Gasauslassbohrungen einmündet. Auf diese Weise sind die Verbindungsleitungen des Sensors durch die Kühlwirkung der Gasspülung besser geschützt.

Mit dieser Temperaturmessung wird ermöglicht, dass eine gleichbleibende Qualität des gegossenen Stahls erreicht wird, dies insbesondere durch eine Anpassung der Giessgeschwindigkeit mit Änderung der Temperatur.

Nachfolgend wird die Erfindung anhand eines Ausführungsbeispiels unter Bezugnahme auf die Zeichnung näher beschrieben. Es zeigen:
- Fig. 1: einen Tundish mit einem Stopfenverschluss und einer Temperaturmesseinrichtung, vereinfacht und teilweise schematisch dargestellt, und
- Fig. 2: den Stopfen aus Fig. 1 mit integriertem Messsensor, vergrössert dargestellt.

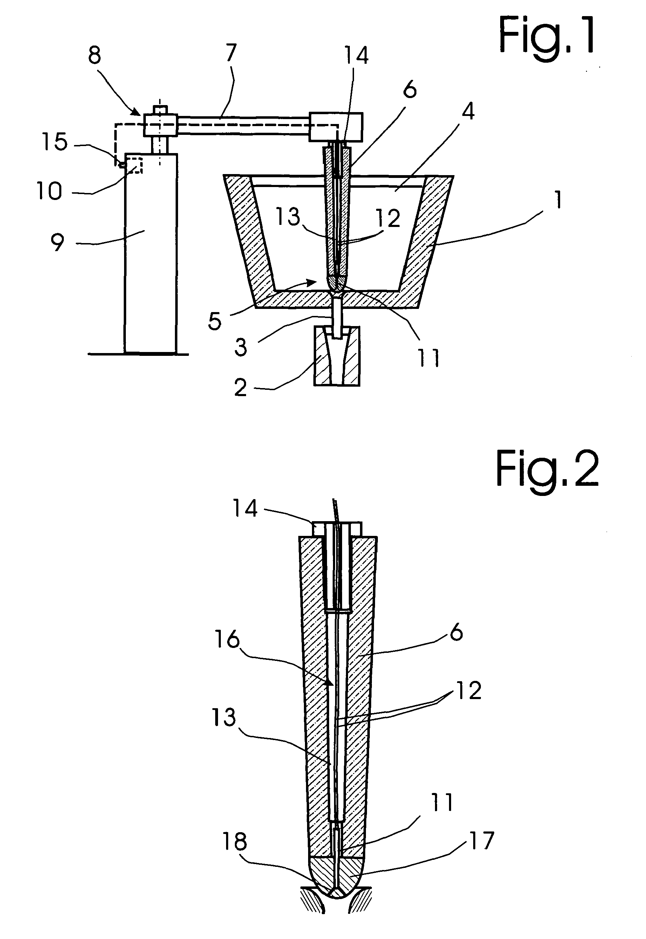

Die in Fig. 1 dargestellte Anlage dient zum Stranggiessen von Stahlerzeugnissen, wie Brammen, Knüppeln oder ähnliche Langprodukte. Die Anlage enthält einen Tundish 1 als Zwischenbehälter zwischen einer nicht dargestellten Giesspfanne und einer Kokille 2 zur Ausformung des zu erzeugenden Produkts. Der Tundish 1 weist einen in die Kokille 2 mündenden Auslasskanal 3 auf, durch welchen die Stahlschmelze 4 in die Kokille hineinfliesst.

Zur Regelung der in die Kokille 2 fliessenden Ausflussmenge ist die Anlage mit einem Stopfenverschluss 5 ausgerüstet, dessen Stopfen 6 den Auslasskanal 3 öffnen und schliessen bzw. mehr oder weniger stark verengen kann.

Der Stopfen 6 ist an einem Tragarm 7 einer Betätigungseinrichtung 8 zum Heben, Senken und gegebenenfalls Schwenken des Stopfens angebracht. Die Einrichtung ist in einer Halterung 9 neben dem Tundish angeordnet.

Die Anlage ist ferner mit einer Temperaturmesseinrichtung zur kontinuierlichen Ermittlung der Temperatur des flüssigen Stahls 4 während des Giessprozesses ausgestattet.

Die Einrichtung weist ein in der Halterung 9 eingebautes Temperaturmessgerät 10 auf, das mit einem im Stopfen 6 integrierten Sensor 11 verbunden ist. Wie insbesondere aus Fig. 2 ersichtlich, ist letzterer zusammen mit den dazugehörigen Verbindungsleitungen 12 in einer axial verlaufenden Sackbohrung 13 des Stopfens 6 untergebracht.

Die Verbindungsleitungen 12 sind elektrische Kabel aus hochtemperaturfestem Material, die am oberen Stopfenende durch eine Hohlschraube 14 zur Befestigung des Stopfens 6 an dem Tragarm 7, und über diesen zum Temperaturmessgerät 10 in der Halterung 9 gezogen werden, wo sie an einem gut zugänglichen Anschlusselement 15 des Temperaturmessgeräts 10 anschliessbar sind. Da der Tragarm 7 und die Halterung 9 in der Regel gekühlt sind, ist die Verlegung der Verbindungskabel 12 in diesen Teilen für die störungsfreie Funktion der Kabel vorteilhaft. Sie erleichtert zudem die Installation der Einrichtung, etwa beim nachträglichen Einbau derselben in einer bestehenden Anlage.

Die Sackbohrung 13 des Stopfens 6 dient gleichsam als Spülgaszufuhrleitung einer Stopfenspülung 16, die im Bereich des Stopfenkopfes 17 mit radialen Gasauslassbohrungen 18 für das Spülgas versehen ist. Die Gasspülung hat auch auf die Verbindungskabel 12 einen kühlenden Effekt.

Durch die erfindungsgemässe Anordnung des Sensors 6 im Inneren des Stopfens ist die Plazierung des Sensors nahe dem Kokilleneinlauf sichergestellt. Um den Messvorgang zu optimieren, wird der Sensor soweit in der Sackbohrung 13 vorgeschoben, dass er in den Stopfenkopf 17 hineinragt. Stopfen und Stopfenkopf sind bekanntlich aus feuerfesten Materialien hergestellt. Sie bieten dem Sensor 6 einen sicheren Schutz gegen thermische, mechanische und chemische Einflüsse.

Bei Gefässen mit mehreren Ausgussöffnungen und ebensovielen Verschlussstopfen, wie es etwa bei Zwischenbehältern für Mehrstranggiessanlagen der Fall ist, wird die Temperaturmesseinrichtung mit je einem Sensor pro Stopfen ausgestattet, so dass man mit einem einzigen Messgerät die Schmelzentemperatur für jeden Giesstrang individuell ermitteln kann. Selbstverständlich ist es aber auch hier im Rahmen der Erfindung möglich, nicht alle, sondern nur einen oder einige der Giesstränge mit Messsensoren auszustatten.

Es ist ebenfalls im Rahmen der Erfindung ohne weiteres möglich, die Sensoren in Stopfensverschlüssen mit massiven Stopfen einzubauen, indem diese nachträglich mit einer entsprechend dimensionierten Aufnahmebohrung für den Sensor und die dazugehörigen Verbindungskabel versehen werden. Die Aussengestalt des Stopfens bleibt jedenfalls, wie auch bei hohlen Stopfen, durch den Einbau des Sensors unverändert. Deren Funktion wird in keiner Weise beeinträchtigt.

Umgekehrt wird die Funktion der Temperaturmesseinrichtung nicht nennenswert durch geringfügige Hubbewegungen des Stopfens während des Giessvorganges beeinflusst.

Die Erfindung ist mit den obigen Erläuterungen ausreichend dargetan. Sie liesse sich selbstverständlich noch in anderen Varianten veranschaulichen. So könnte mehr als ein Sensor im Stopfen integriert sein, zum Beispiel in unterschiedlicher Höhe im Stopfen.

Bei Gefässen mit mehreren Auslassöffnungen, wie das zum Beispiel bei Mehrstranggiessanlagen der Fall ist, ist es im Sinne einer individuellen Regelung des Giessprozesses vorteilhaft, wenn mehrere oder optimalerweise alle Stopfenverschlüsse der Anlage erfindungsgemäss mit je einem eigenen Temperaturmesssensor versehen sind. Dadurch kann dauernd die Schmelzentemperatur separat für jeden einzelnen Strang mit einer und derselben Einrichtung gemessen werden.

Die Spülgaszufuhrleitung im Stopfen (6) könnte im Prinzip auch durch eine separate Gasleitung erfolgen.

## Patentansprüche

1. Stopfen für einen Stopfenverschluss in einem metallurgischen Gefäss (1), mittels welchem zur Regelung des Schmelzenausflusses eine Öffnung (3) im Gefäss (1) geschlossen bzw. geöffnet werden kann, **dadurch gekennzeichnet, dass**
im Stopfen (6) zumindest ein Sensor (11) sowie eine an diesen Sensor angeschlossene Temperaturmesseinrichtung zur Ermittlung der Temperatur der Metallschmelze integriert ist.

2. Stopfen nach Anspruch 1, **dadurch gekennzeichnet, dass** der Sensor (11) in den Stopfenkopf (17) hineinragt und über eine Verbindungsleitung (12) oder über Funk oder dergleichen an die Temperaturmesseinrichtung angeschlossen ist.

3. Stopfen nach Anspruch 1 oder 2, **dadurch gekennzeichnet, dass** der Sensor (11) und die Verbindungsleitung (12) in einer Sackbohrung (13) des Stopfens (6) angeordnet sind.

4. Stopfen nach einem der Ansprüche 1 bis 3, **dadurch gekennzeichnet, dass** die Verbindungsleitung (12) annähernd am oberen Ende des Stopfens (6) einen Anschlussstecker aufweist, mittels welchem sie mit einer fixen Leitung im Stopfenverschluss verbindbar ist.

5. Stopfen nach einem der Ansprüche 1 bis 4, **dadurch gekennzeichnet, dass**
der Stopfen (6) mit einer Stopfenspülung (16) versehen ist, wobei die Sackbohrung (13) des Stopfens unmittelbar oder mittelbar als Spülgaszufuhrleitung zu einer oder mehreren Gasauslassbohrungen (18) im Stopfenkopf (17) mündet.

6. Stopfenverschluss mit einem Stopfen nach einem der Ansprüche 1 bis 5, bei dem der Stopfen (6) am Tragarm (7) einer Halterung (9) mit einer Betätigungseinrichtung (8) zum Heben, Senken und/oder Schwenken des Stopfens (6) befestigt ist,
**dadurch gekennzeichnet, dass**
die an den Sensor (11) angeschlossene Verbindungsleitung (12) über den Tragarm (7) zur Halterung (9) hin geführt und dort an das Messgerät (10) der Temperaturmesseinrichtung anschliessbar ist.

7. Stopfenverschluss nach Anspruch 6, **dadurch gekennzeichnet, dass**
das Temperaturmessgerät (10) in der Halterung (9) eingebaut und mit einem an der Halterung angebrachten Anschlusselement (15) für die Verbindungsleitungen (12) des Sensors (11) versehen ist.

8. Stopfenverschluss nach Anspruch 6 oder 7, **dadurch gekennzeichnet, dass**
die Verbindungsleitung (12) durch mindestens ein hochtemperaturfestes elektrisches Kabel gebildet ist.

9. Stopfenverschluss nach einem der Ansprüche 6 bis 8, **dadurch gekennzeichnet, dass**
der Stopfen (6) mit einer Stopfenspülung (16) versehen ist, wobei die Sackbohrung (13) des Stopfens als Spülgaszufuhrleitung zu einer oder mehreren Gasauslassbohrungen mündet.
